# EUROPÄISCHE PATENTSCHRIFT

(11) **EP 3 700 803 B1**
(45) Veröffentlichungstag und Bekanntmachung des Hinweises auf die Patenterteilung: **28.09.2022**
(21) Anmeldenummer: 18731801.9
(22) Anmeldetag: 13.06.2018
(51) Int. Cl.: B62D 15/02, G08G 1/14, G08G 1/16

(54) **VERFAHREN, VORRICHTUNG, COMPUTERPROGRAMM UND COMPUTERPROGRAMMPRODUKT ZUM BETREIBEN EINER DISPLAYEINHEIT EINES FAHRZEUGS**
METHOD, DEVICE, COMPUTER PROGRAM AND COMPUTER PROGRAM PRODUCT FOR OPERATING A DISPLAY UNIT IN A VEHICLE
PROCÉDÉ, DISPOSITIF, PROGRAMME INFORMATIQUE ET PRODUIT-PROGRAMME INFORMATIQUE PERMETTANT DE FAIRE FONCTIONNER UNE UNITÉ D'AFFICHAGE D'UN VÉHICULE

(30) Priorität: 24.10.2017 DE 102017218921
(43) Veröffentlichungstag der Anmeldung: 02.09.2020
(73) Patentinhaber: Bayerische Motoren Werke Aktiengesellschaft, 80809 München (DE)
(72) Erfinder: LAUBER, Felix, 80634 München (DE); MANSFELD, Simon, 81373 München (DE); VON EICHHORN, Andreas, 80538 München (DE)
(86) Internationale Anmeldenummer: PCT/EP2018/065670
(87) Internationale Veröffentlichungsnummer: WO 2019/081072

(56) Entgegenhaltungen:
- EP-A1- 1 038 734
- DE-A1-102015 002 438
- JP-A- 2011 066 657
- US-A1- 2011 025 483

## Beschreibung

Die Erfindung betrifft ein Verfahren, eine Vorrichtung, ein Computerprogramm und ein Computerprogrammprodukt zum Betreiben einer Displayeinheit eines Fahrzeugs, bei dem abhängig von einer relativen Position des Fahrzeugs zur Parklücke, eine schematische Darstellung zum Visualisieren der Parklücke erstellt wird.

Parkassistenzsysteme erleichtern für den Fahrer das Parken des Fahrzeugs. Kamerabasierte Systeme ermöglichen beispielweise mittels Rückfahrkameras oder einer Vogelperspektive-Ansicht (z.B. Surround View von BMW) das visualisieren der Umgebung des Fahrzeugs während dem Parken.

Die EP 1 038 734 A1 beschreibt eine Fahrunterstützungsvorrichtung, umfassend eine Umgebungsabbildungseinrichtung zum Abbilden der Umgebung des Fahrzeugs und mit einer Kamera und zum Erzeugen eines Umgebungsbildes, eine Erzeugungseinrichtung für ein synthetisches Bild durch Überlagern eines angenommenen Bewegungsmusters mit dem Umgebungsbild, und eine Anzeigeeinrichtung zum Anzeigen des synthetischen Bildes.

Die Aufgabe, die der Erfindung zugrunde liegt, ist es, ein Verfahren zum Betreiben einer Displayeinheit eines Fahrzeugs sowie eine korrespondierende Vorrichtung, ein Computerprogramm und ein Computerprogrammprodukt zu schaffen, das dazu beiträgt, eine verständliche und zuverlässige Visualisierung einer Parklücke für ein Fahrer zu ermöglichen.

Die Aufgabe wird gelöst durch die Merkmale der unabhängigen Patentansprüche. Vorteilhafte Ausgestaltungen sind in den Unteransprüchen gekennzeichnet.

Gemäß einem ersten Aspekt betrifft die Erfindung ein Verfahren zum Betreiben einer Displayeinheit eines Fahrzeugs. Bei dem Verfahren werden eine Parklücke, mindestens eine weitere Parklücke und Kollisionshindernisse erfasst, wobei die Kollisionshindernisse Hindernisse sind, die sich in der Nähe des Fahrzeugs und/oder der Parklücke befinden. Eine relative Position des Fahrzeugs zur Parklücke wird fortlaufend ermittelt. Ein Steuerungssignal wird erzeugt zum Erzeugen eines Bildes auf der Displayeinheit und zwar abhängig von der relativen Position des Fahrzeugs zur Parklücke und zur mindestens einen weiteren Parklücke, wobei das Bild ein virtuelles Fahrzeug, virtuelle Parklücken und schematische Elemente umfasst, wobei das virtuelle Fahrzeug eine schematische Darstellung des Fahrzeugs repräsentiert, die virtuellen Parklücken eine schematische Darstellung der Parklücken repräsentieren und die schematische Elemente eine schematische Darstellung der Kollisionshindernisse repräsentieren, wobei die fortlaufend ermittelte relative Position des Fahrzeugs zur Parklücke mit einem vorgegebenen Schwellenwert verglichen wird und das Steuerungssignal derart erzeugt wird, dass bei einer relativen Position des Fahrzeugs zur Parklücke, die einen kleineren Abstand des Fahrzeugs zur Parklücke repräsentiert als der vorgegebenen Schwellenwert, das Steuerungssignal so erzeugt wird, dass eine kamerabildbasierte Vogelperspektive im Bild angezeigt wird.

Fahrzeugsensoren können beispielweise dafür eingesetzt werden, Parklücken und mögliche Kollisionshindernisse in der Nähe des Fahrzeugs zu erfassen. Das Steuerungssignal zum Erzeugen des Bildes kann beispielweise automatisch beim Erkennen der Parklücke erzeugt werden. Das Erzeugen des Steuersignals abhängig von der relativen Position des Fahrzeugs zur Parklücke ermöglicht das Erzeugen eines Bildes, in dem ein virtuelles Fahrzeug und eine virtuelle Parklücke vollständig dargestellt werden können. Das Bild repräsentiert eine schematische Darstellung, die aus drei Elementen besteht, dem virtuellen Fahrzeug, der virtuellen Parklücke und den schematischen Elementen, wobei die schematischen Elemente beispielsweise repräsentativ sind für, durch Fahrzeugsensoren erfasste, mögliche Kollisionshindernisse.

Die virtuelle Parklücke kann beispielweise als Overlay über einem Hintergrund des Bildes visualisiert werden, wobei der Hintergrund des Bildes durch die schematischen Elemente konstruiert ist. Die schematische Darstellung ermöglicht eine einfache und intuitive Visualisierung der Parklücke für den Fahrer. Wenn mittels der Fahrzeugsensoren mehrere Parklücken in der Nähe des Fahrzeugs erfasst werden, kann das Steuerungssignal zum Erzeugen des Bildes so erzeugt werden, dass alle erfassten Parklücken im Bild vollständig dargestellt werden. Das erleichtert für den Fahrer die Auswahl einer passenden Parklücke.

Das Einsetzen der schematischen Darstellung zum Visualisieren der Parklücke ermöglicht eine verzerrungsfreie Darstellung eines größeren Bereichs der Umgebung des Fahrzeugs wie bei Systemen mit einer kamerabasierten Vogelperspektive-Ansicht (z.B. Surround View von BMW). Die Parklücke kann mit der unverzerrten Größe und an der unverzerrten Position angezeigt werden. Die schematische Darstellung benötigt keine technisch aufwändige 3D-Rekonstruktion der Umgebung des Fahrzeugs. Die schematische Darstellung ermöglicht beispielsweise auch dann eine Visualisierung der Parklücke, wenn deren Einsicht aus der Perspektive einer Kamera durch Hindernisse versperrt ist.

Mittels der schematischen Darstellung können wichtige Informationen zum Parkprozess für den Fahrer bereitgestellt werden, ohne dass der Fahrer durch eine Flut unnötiger Informationen abgelenkt oder überfordert wird.

In einer vorteilhaften Ausgestaltung gemäß dem ersten Aspekt wird das Steuerungssignal zum Erzeugen des Bildes wird abhängig von der ermittelten relativen Position des Fahrzeugs zur Parklücke angepasst.

Das Steuerungssignal zum Erzeugen des virtuellen Bildes wird dynamisch angepasst zum Anzeigen der kompletten virtuellen Parklücke und des virtuellen Fahrzeugs, während das Fahrzeug sich bewegt. Das ermöglicht eine deutliche Visualisierung der virtuellen Parklücke und des virtuellen Fahrzeugs für den Fahrer während der Bewegung des Fahrzeugs.

In einer weiteren vorteilhaften Ausgestaltung gemäß dem ersten Aspekt wird die fortlaufend ermittelte relative Position des Fahrzeugs zur Parklücke mit einem vorgegebenen weiteren Schwellenwert verglichen und das Steuerungssignal wird derart erzeugt, dass in einem ersten Zustand, in dem das Fahrzeug einen größeren Abstand zur Parklücke aufweist als der vorgegebene weitere Schwellenwert, das virtuelle Fahrzeug, die virtuelle Parklücke und die schematischen Elemente im Bild kleiner dargestellt werden als in einem zweiten Zustand.

In dem zweiten Zustand, in dem das Fahrzeug einen kleineren Abstand zur Parklücke aufweist als der vorgegebene weitere Schwellenwert das virtuelle Fahrzeug, die virtuelle Parklücke und die schematischen Elemente im Bild größer dargestellt werden als in dem ersten Zustand. Das virtuelle Fahrzeug und die virtuelle Parklücke werden vollständig im Bild dargestellt.

Die Möglichkeit zum Umschalten zu einem reingezoomten Bild in dem das virtuelle Fahrzeug, die virtuelle Parklücke und die schematischen Elemente größer dargestellt werden als in einem herausgezoomten Bild, wenn das Fahrzeug sich von der Parklücke nähert, ermöglicht eine bessere Visualisierung des Parkmanövers und erleichtert das Kontrollieren des Parkvorgangs für den Fahrer. Wenn das Fahrzeug sich von der Parklücke entfernt, wird das Steuerungssignal so erzeugt, dass das herausgezoomte Bild, in dem das virtuelle Fahrzeug, die virtuelle Parklücke und die schematischen Elemente kleiner dargestellt werden als beim reingezoomten Bild, erzeugt wird. Das ermöglicht eine bessere Visualisierung der Umgebung des Fahrzeugs für den Fahrer. Das Umschalten zwischen einem herausgezoomten Bild und einem reingezoomten Bild hat den Vorteil einer stabilen Darstellung des Parkvorgangs für den Fahrer.

In einer weiteren vorteilhaften Ausgestaltung gemäß dem ersten Aspekt wird abhängig von der relativen Position des Fahrzeugs zur Parklücke das Steuerungssignal fortlaufend angepasst. Das fortlaufende Anpassen des Signalisierungssignals abhängig von der relativen Position des Fahrzeugs zur Parklücke hat den Vorteil, dass das virtuelle Bild fortlaufend angepasst wird während das Fahrzeug sich bewegt, so dass eine dynamische Darstellung des Parkvorgangs für den Fahrer angezeigt wird. Das bedeutet, dass die Größe des virtuellen Fahrzeugs, der virtuellen Parklücke und der schematischen Elemente dynamisch angepasst wird abhängig von der relativen Position des Fahrzeugs zur Parklücke.

Für eine bessere Darstellung des Parkvorgangs ist es beispielsweise möglich, dass das Steuerungssignal so erzeugt wird, dass ein herausgezoomtes Bild und ein reingezoomtes Bild erzeugt werden, wobei das herausgezoomte Bild und/oder das reingezoomte Bild fortlaufend angepasst werden abhängig von der relativen Position des Fahrzeugs zur Parklücke.

Wenn das Fahrzeug sich beispielsweise zum Einparken in der Richtung der Parklücke bewegt, wird der relative Abstand des Fahrzeugs zur Parklücke kleiner. Das Steuerungssignal kann fortlaufend angepasst werden, so dass das virtuelle Fahrzeug und die virtuelle Parklücke im Bild größer dargestellt werden. Das ermöglicht eine deutliche Visualisierung der virtuellen Parklücke und des virtuellen Fahrzeugs für den Fahrer. Wenn das Fahrzeug sich beispielweise von der Parklücke entfernt, wird der relative Abstand des Fahrzeugs zur Parklücke größer. Das Steuerungssignal kann dann fortlaufend angepasst werden, so dass das virtuelle Fahrzeug und die virtuelle Parklücke im Bild kleiner dargestellt werden. Das ermöglicht eine deutliche Visualisierung der Umgebung des Fahrzeugs für den Fahrer. Die vollständige Darstellung des virtuellen Fahrzeugs und der virtuellen Parklücke im Bild während der Bewegung des Fahrzeugs erleichtert für den Fahrer das Kontrollieren des Parkvorgangs.

In einer weiteren vorteilhaften Ausgestaltung gemäß dem ersten Aspekt ist der vorgegebene Schwellenwert kleiner als der vorgegebene weitere Schwellenwert.

Wenn das Fahrzeug sich beispielsweise zum Einparken der Parklücke nähert, kann anstatt der schematischen Darstellung eine kamerabildbasierte Vogelperspektive im Bild automatisch angezeigt werden. Die kamerabildbasierte Vogelperspektive, die auch als TopView-Ansicht bezeichnet werden kann, kann ein Bild aus der Vogelperspektive, also von oben auf das Fahrzeug, repräsentieren. Es können sich mehrere Weitwinkelkameras am Fahrzeug befinden und die Bilder der Weitwinkelkameras werden digital gekoppelt dargestellt. Die kamerabildbasierte Vogelperspektive kann die unmittelbar nahe Umgebung des Fahrzeugs unverzerrt darstellen.

In einer weiteren vorteilhaften Ausgestaltung gemäß dem ersten Aspekt wird eine relative Position des Fahrzeugs zu den Kollisionshindernissen ermittelt. Das Steuerungssignal wird so erzeugt, dass in dem Bild eine Farbe der schematischen Elemente abhängig von der relativen Position des Fahrzeugs zu den Kollisionshindernissen angezeigt wird.

Die von den Fahrzeugsensoren erfassten möglichen Kollisionshindernisse können abhängig von ihrem Abstand zum Fahrzeug verschiedene Farben aufweisen. Beispielsweise kann das Steuerungssignal zum Erzeugen des Bildes so erzeugt werden, dass Hindernisse, die sich weit weg vom Fahrzeug befinden, in grau dargestellt werden. Hindernisse, die sich in der Nähe des Fahrzeugs befinden, können beispielsweise in grün, gelb oder rot dargestellt werden. Dadurch kann die erzeugte schematische Darstellung für den Fahrer intuitiv verständlich sein.

In einer weiteren vorteilhaften Ausgestaltung gemäß dem ersten Aspekt wird das Steuerungssignal so erzeugt, dass mögliche Parkmanöver für eine Auswahl für den Fahrer angezeigt werden. Abhängig von einer detektierten Auswahl des Fahrers wird das Fahrzeug automatisiert eingeparkt.

Das Anzeigen verschiedener möglicher Parkmanöver erleichtert für den Fahrer die Auswahl eines passenden Parkmanövers. Abhängig von einer Vorauswahl des Fahrers wird das vorausgewählte Parkmanöver hervorgehoben dargestellt. Abhängig von einer Bestätigung der Vorauswahl durch den Fahrer wird das vorausgewählte Parkmanöver ausgewählt und das Fahrzeug automatisiert eingeparkt.

Gemäß einem zweiten Aspekt betrifft die Erfindung eine Vorrichtung zum Betreiben einer Displayeinheit eines Fahrzeugs, wobei die Vorrichtung dazu ausgebildet ist das Verfahren gemäß dem ersten Aspekt durchzuführen. Die Vorrichtung umfasst beispielweise eine Datenverarbeitungsvorrichtung.

Gemäß einem dritten Aspekt betrifft die Erfindung ein Computerprogramm zum Betreiben einer Displayeinheit eines Fahrzeugs. Das Computerprogramm ist ausgebildet, das Verfahren gemäß dem ersten Aspekt durchzuführen.

Gemäß einem vierten Aspekt betrifft die Erfindung ein Computerprogrammprodukt umfassend ausführbaren Programmcode, wobei der Programcode bei Ausführung durch eine Datenverarbeitungsvorrichtung das Verfahren gemäß dem ersten Aspekt durchführt.

Das Computerprogrammprodukt umfasst insbesondere ein von der Datenverarbeitungsvorrichtung lesbares Medium, auf dem der Programmcode gespeichert ist.

Ausführungsbeispiele der Erfindung sind im Folgenden anhand der schematischen Zeichnungen näher erläutert. Es zeigen:
- Figur 1: ein Ablaufdiagramm eines Programms zum Betreiben einer Displayeinheit eines Fahrzeugs und
- Figur 2: ein Bild, in dem eine schematische Darstellung angezeigt ist,
- Figur 3: ein Bild, in dem eine kamerabildbasierte Vogelperspektive angezeigt ist.

Elemente gleicher Konstruktion oder Funktion sind figurenübergreifend mit den gleichen Bezugszeichen gekennzeichnet.

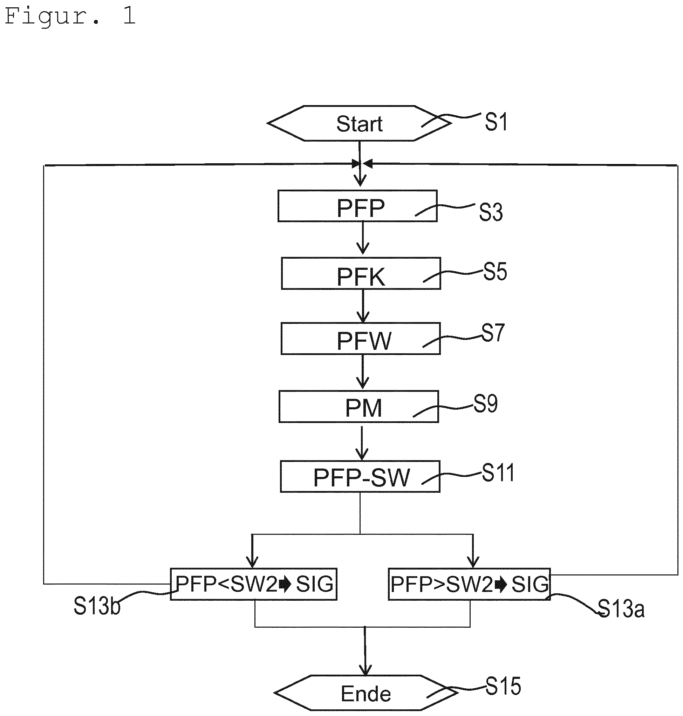

Die Figur 1 zeigt ein Ablaufdiagramm eines Programms zum Betreiben einer Displayeinheit eines Fahrzeugs.

Eine Vorrichtung ist beispielweise dazu ausgebildet, das Programm auszuführen. Die Vorrichtung weist hierfür insbesondere eine Recheneinheit, einen Programm- und Datenspeicher, sowie beispielweise eine oder mehrere Kommunikationsschnittstellen auf. Der Programm- und Datenspeicher und/oder die Recheneinheit und/oder die Kommunikationsschnittstellen können in einer Baueinheit und/oder verteilt auf mehrere Baueinheiten ausgebildet sein.

Die Vorrichtung kann auch als Vorrichtung zum Betreiben einer Displayeinheit eines Fahrzeugs bezeichnet werden. Die Vorrichtung ist beispielweise signaltechnisch mit der Displayeinheit zum Senden und Empfangen von Daten gekoppelt.

Alternativ oder zusätzlich ist die Vorrichtung in einem Back-End und/oder in einem Fahrzeug und/oder in einer mobilen Einheit, wie einem Smartphone ausgebildet.

Die Displayeinheit ist beispielweise im Armaturenbrett des Fahrzeugs integriert und/oder eine Head-up-Displayeinheit und/oder eine zentrale Anzeigeeinheit beispielsweise in der Mittelkonsole.

Auf dem Programm- und Datenspeicher der Vorrichtung ist insbesondere das Programm zum Betreiben einer Displayeinheit eines Fahrzeugs gespeichert.

Das Ablaufdiagramm der Figur 1 wird im Folgenden näher erläutert.

Das Programm wird in einem Schritt S1 gestartet, in dem beispielweise Variablen initialisiert werden. Das Programm wird anschließend in einem Schritt S3 fortgesetzt.

Im Schritt S3 wird eine Parklücke, die sich in der Nähe des Fahrzeugs befindet beispielsweise mittels Fahrzeugsensoren erfasst. Die Parklücke kann beispielweise eine Längs- oder eine Querparklücke sein. Eine relative Position des Fahrzeugs zur Parklücke PFP wird fortlaufend ermittelt. Die relative Position des Fahrzeugs zur Parklücke PFP ist beispielsweise repräsentativ für einen Abstand des Fahrzeugs zur Parklücke. Es werden auch Kollisionshindernisse erfasst beispielsweise mittels Fahrzeugsensoren, wobei die Kollisionshindernisse Hindernisse sind, die sich in der Nähe des Fahrzeugs und/oder der Parklücke befinden. Die Kollisionshindernisse können beispielweise weitere Fahrzeuge und/oder Gebäude und/oder Bordsteine sein. Das Programm wird anschließend in einem optionalen Schritt S5 fortgesetzt.

Im optionalen Schritt S5 wird eine relative Position des Fahrzeugs zu den Kollisionshindernissen PFK ermittelt. Das Programm wird anschließend in einem optionalen Schritt S7 fortgesetzt.

Im Schritt S7 wird mindestens eine weitere Parklücke erfasst, wobei die weitere Parklücke eine andere Parklücke ist, die sich in der Nähe des Fahrzeugs befindet. Eine relative Position des Fahrzeugs zu der weiteren Parklücke PFW wird ermittelt. Die mindestens eine weitere Parklücke kann beispielweise mittels Fahrzeugsensoren erfasst werden. Das Programm wird anschließend in einem optionalen Schritt S9 fortgesetzt.

Im optionalen Schritt S9 werden mögliche Parkmanöver PM zum Einparken des Fahrzeugs ermittelt. Die mögliche Parkmanöver PM können beispielsweise abhängig von der relativen Position des Fahrzeugs zur Parklücke PFP und/oder den erfassten Kollisionshindernissen. Das Programm wird anschließend in einem optionalen Schritt S11 fortgesetzt.

Im Schritt S11 wird die ermittelte relative Position des Fahrzeugs zur Parklücke PFP mit einem vorgegebenen zweiten Schwellenwert SW2 verglichen. Der zweite Schwellenwert SW2 wird beispielweise so vorgegeben, dass er ein Mindestabstand des Fahrzeugs zur Parklücke repräsentiert bei dem die Parklücke mit einem Kamerabild ohne Verzerrung dargestellt werden kann. Das Programm wird in einem Schritt S13a fortgeführt. Wenn die ermittelte relative Position des Fahrzeugs zur Parklücke PFP größer ist als der zweite Schwellenwert SW2, wird das Programm in dem Schritt S13a fortgesetzt. Wenn die ermittelte relative Position des Fahrzeugs zur Parklücke PFP kleiner ist als der zweite Schwellenwert SW2, wird das Programm in dem Schritt S13b fortgesetzt.

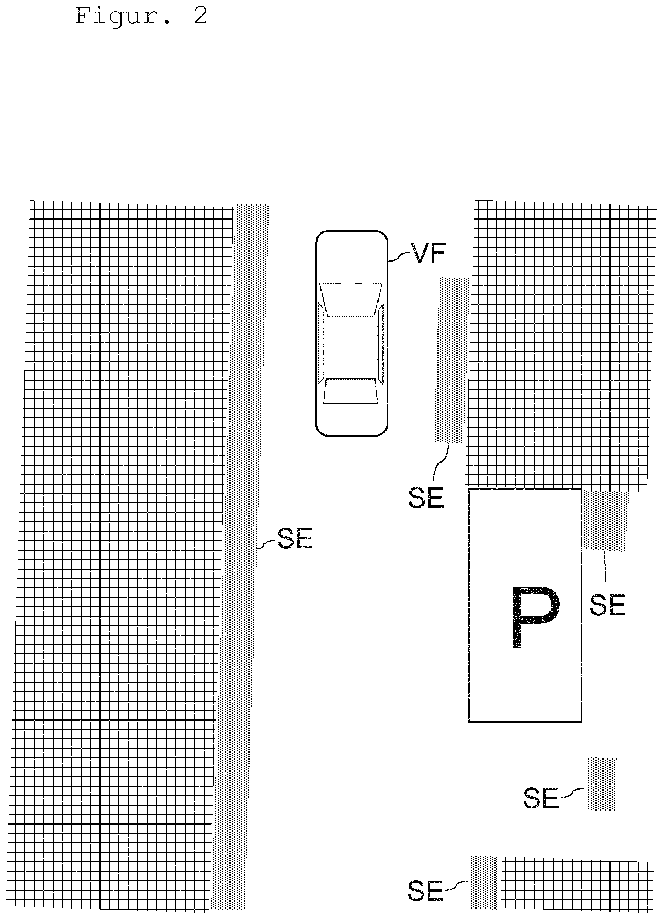

In dem Schritt S13a wird ein Steuerungssignal SIG zum Erzeugen des Bildes erzeugt abhängig von der ermittelten relativen Position des Fahrzeugs zur Parklücke PFP. Das Bild umfasst ein virtuelles Fahrzeug VF, eine virtuelle Parklücke P und schematische Elemente SE (siehe Figur 2), wobei das virtuelle Fahrzeug VF eine schematische Darstellung des Fahrzeugs repräsentiert, die virtuelle Parklücke P eine schematische Darstellung der Parklücke repräsentiert und die schematischen Elemente eine schematische Darstellung der Kollisionshindernisse repräsentieren. Abhängig von der relativen Position des Fahrzeugs zur Parklücke PFP wird das Steuerungssignal SIG zum Erzeugen des Bildes beispielsweise so erzeugt, dass das virtuelle Fahrzeug VF und die virtuelle Parklücke P vollständig im Bild angezeigt werden. Das Steuerungssignal SIG zum Erzeugen des Bildes wird beispielsweise so erzeugt, dass im Bild eine schematische Darstellung angezeigt wird, in der das virtuelle Fahrzeug VF, die virtuelle Parklücke P und die schematischen Elemente SE dargestellt werden. Das Steuerungssignal SIG zum Erzeugen des Bildes wird beispielsweise so erzeugt, dass die schematische Darstellung automatisch beim Erkennen der Parklücke oder auf Wunsch des Fahrers im Bild angezeigt wird.

Durch die schematische Darstellung kann ein größerer Bereich in der Umgebung des Fahrzeugs ohne Verzerrung dargestellt werden als mit einem Kamerabild. Die schematische Darstellung ermöglicht das Anzeigen der virtuellen Parklücke an der unverzerrten Position und mit der unverzerrten Größe für den Fahrer. Wichtige Informationen zum Parkprozess z.B. die Lage der Parklücke und Kollisionshindernisse können für den Fahrer bereitgestellt werden, ohne dass er durch unnötige Informationen abgelenkt oder überfordert wird.

Die schematische Darstellung ermöglicht eine zuverlässige und verständliche Visualisierung der Parklücke für den Fahrer.

Wenn der optionale Schritt S5 ausgeführt wird, wird das Steuerungssignal SIG zum Erzeugen des Bildes so erzeugt, dass in dem Bild eine Farbe der schematischen Elemente abhängig von der relativen Position des Fahrzeugs zu den Kollisionshindernissen PFK angezeigt wird.

Kollisionshindernisse, die sich beispielsweise weit weg vom Fahrzeug befinden, können im Bild in einer grauen Farbe dargestellt werden. Kollisionshindernisse die sich beispielsweise in der Nähe des Fahrzeugs befinden können im Bild, abhängig von der relativen Position des Fahrzeugs zu den Kollisionshindernissen PFK, in grüner und/oder gelber und/oder roter Farbe dargestellt werden. Dadurch kann die schematische Darstellung für den Fahrer intuitiv verständlich sein.

Wenn der optionale Schritt S7 ausgeführt wird, wird das Steuerungssignal SIG abhängig von der relativen Position des Fahrzeugs zu der weiteren Parklücke PFW erzeugt. Das Steuerungssignal SIG zum Erzeugen des Bildes wird beispielsweise so erzeugt, dass alle erfassten Parklücken und das virtuelle Fahrzeug VF im Bild vollständig dargestellt werden. Die Visualisierung von Parklücken, die sich in der Nähe des Fahrzeugs befinden, ermöglicht für den Fahrer die Auswahl einer passenden Parklücke.

Wenn der optionale Schritt S9 ausgeführt wird, wird das Steuerungssignal SIG so erzeugt, dass mögliche Parkmanöver PM für eine Auswahl für den Fahrer angezeigt werden. Das Anzeigen möglicher Parkmanöver PM erleichtert für den Fahrer die Auswahl eines passenden Parkmanövers Das Fahrzeug kann abhängig von einer detektierten Auswahl des Fahrers automatisiert eingeparkt werden.

Das Programm wird anschließend in dem Schritt S3 fortgesetzt beispielsweise bis das Fahrzeug eingeparkt wird. Bei einem erneuten Durchlaufen des Programms, kann dann das Steuerungssignal SIG angepasst werden. Das Steuerungssignal SIG wird beispielsweise so angepasst, dass abhängig von der relativen Position des Fahrzeugs zur Parklücke PFP entweder ein reingezoomtes Bild, in dem das virtuelle Fahrzeug VF, die virtuelle Parklücke P und die schematischen Elemente SE grösser dargestellt werden als in einem herausgezoomten Bild oder das herausgezoomte Bild angezeigt wird. Die Möglichkeit zum Umschalten zwischen einem reingezoomten und einem herausgezoomten Bild ermöglicht eine deutliche und stabile Darstellung des Parkvorgangs für den Fahrer.

Alternativ oder zusätzlich wird das Steuerungssignal SIG fortlaufend angepasst. Dies bedeutet, dass die Größe des virtuellen Fahrzeugs VF, der virtuellen Parklücke P und der schematischen Elemente SE fortlaufend abhängig von der relativen Position des Fahrzeugs zur Parklücke PFP angepasst wird. Die fortlaufende Anpassung des Steuerungssignals SIG abhängig von der relativen Position des Fahrzeugs zur Parklücke PFP ermöglicht eine verständliche und dynamische Darstellung des Parkvorgangs für den Fahrer.

Alternativ wird das Programm in einem Schritt S15 beendet und kann gegebenenfalls wieder in dem Schritt S1 gestartet werden.

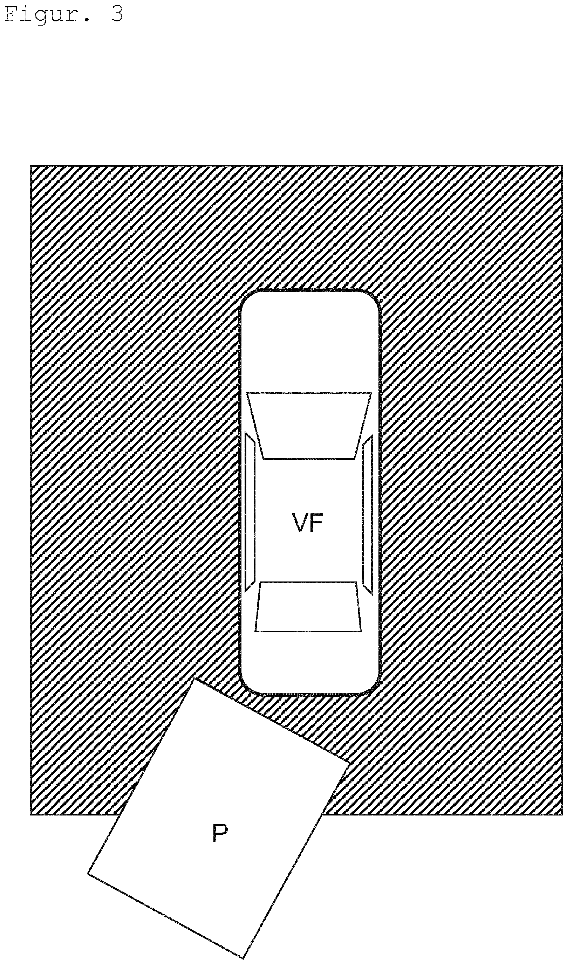

In dem Schritt 13b, wird das Steuerungssignal SIG so erzeugt, dass eine kamerabildbasierte Vogelperspektive des Fahrzeugs (siehe Figur3) im Bild angezeigt wird. Die kamerabildbasierte Vogelperspektive umfasst das virtuelle Fahrzeug VF, die virtuelle Parklücke und eine 2D- Umgebung des Fahrzeugs, wobei die 2D- Umgebung des Fahrzeugs in Figur 3 durch einen schraffierten Bereich angezeigt ist. Wenn das Fahrzeug beispielweise eingeparkt wird und sich der Parklücke nähert, kann das Steuerungssignal SIG zum Erzeugen des Bildes so erzeugt werden, dass anstatt der schematischen Darstellung die kamerabildbasierte Vogelperspektive im Bild angezeigt wird. Die Umschaltung von der schematischen Darstellung zum Kamerabild kann entweder automatisch oder auf Wusch des Fahrers erfolgen. Die kamerabildbasierte Vogelperspektive, die auch als TopView-Ansicht bezeichnet werden kann, kann ein Bild aus der Vogelperspektive, also von oben auf das Fahrzeug, repräsentieren. Es befinden sich mehrere Weitwinkelkameras am Fahrzeug und die Einzelbilder der Weitwinkelkameras werden digital zu einer einzigen zusammenhängenden Draufsicht zusammengefügt. Die kamerabildbasierte Vogelperspektive kann die unmittelbar nahe Umgebung des Fahrzeugs unverzerrt darstellen. Wenn das Fahrzeug nahe genug an der Parklücke ist, kann somit ein Kamerabild zum Visualisieren der Umgebung des Fahrzeugs ohne Verzerrung eingesetzt werden. Das Kamerabild ermöglicht für den Fahrer eine realitätsnahe Visualisierung der Parklücke.

Wenn das Fahrzeug sich beispielsweise von der Parklücke entfernt, kann entweder automatisch oder auf Wunsch des Fahrers wieder zur schematischen Darstellung umgeschaltet werden.

Das Programm wird anschließend in dem Schritt S3 fortgesetzt beispielsweise bis das Fahrzeug eingeparkt wird. Bei einem erneuten Durchlaufen des Programms, kann dann das Steuerungssignal SIG angepasst werden. Das Steuerungssignal SIG wird beispielsweise so angepasst, dass die Größe des virtuellen Fahrzeugs VF, der virtuellen Parklücke P und der schematischen Elemente SE im Bild abhängig von der relativen Position des Fahrzeugs zur Parklücke angepasst wird.

Alternativ wird das Programm in einem Schritt S15 beendet und kann gegebenenfalls wieder in dem Schritt S1 gestartet werden.

### Bezugszeichenliste

- VF: Virtuelles Fahrzeug
- P: Virtuelle Parklücke
- SE: Schematische Elemente
- PFP: Relative Position des Fahrzeugs zur Parklücke
- PFW: Relative Position des Fahrzeugs zur weiteren Parklücke
- PFK: Relative Position des Fahrzeugs zu den Kollisionshindernissen
- SW1: Erster Schwellenwert
- SW2: Zweiter Schwellenwert
- PM: Mögliche Parkmanöver
- SIG: Steuerungssignal

## Patentansprüche

1. Verfahren zum Betreiben einer Displayeinheit eines Fahrzeugs, bei dem
- eine Parklücke, mindestens eine weitere Parklücke und Kollisionshindernisse erfasst werden, wobei die Kollisionshindernisse Hindernisse sind, die sich in der Nähe des Fahrzeugs und/oder der Parklücken befinden,
- eine relative Position des Fahrzeugs zur Parklücke (PFP) fortlaufend ermittelt wird,
- ein Steuerungssignal (SIG) erzeugt wird zum Erzeugen eines Bildes auf der Displayeinheit und zwar abhängig von der relativen Position des Fahrzeugs zur Parklücke (PFP) und zur mindestens einen weiteren Parklücke, wobei das Bild ein virtuelles Fahrzeug (VF), virtuelle Parklücken (P) und schematische Elemente (SE) umfasst, wobei das virtuelle Fahrzeug (VF) eine schematische Darstellung des Fahrzeugs repräsentiert, die virtuellen Parklücken (P) eine schematische Darstellung der Parklücken repräsentieren und die schematischen Elemente (SE) eine schematische Darstellung der Kollisionshindernisse repräsentieren, wobei die fortlaufend ermittelte relative Position des Fahrzeugs zur Parklücke (PFP) mit einem vorgegebenen Schwellenwert (SW2) verglichen wird und das Steuerungssignal (SIG) derart erzeugt wird, dass bei einer relativen Position des Fahrzeugs zur Parklücke (PFP), die einen kleineren Abstand des Fahrzeugs zur Parklücke repräsentiert als der vorgegebene Schwellenwert (SW2), das Steuerungssignal (SIG) so erzeugt wird, dass eine kamerabildbasierte Vogelperspektive im Bild angezeigt wird.

2. Verfahren nach Anspruch 1, bei dem
- das Steuerungssignal (SIG) zum Erzeugen des Bildes abhängig von der ermittelten relativen Position des Fahrzeugs zur Parklücke (PFP) angepasst wird.

3. Verfahren nach Anspruch 2, bei dem die fortlaufend ermittelte relative Position des Fahrzeugs zur Parklücke (PFP) mit einem vorgegebenen weiteren Schwellenwert (SW1) verglichen wird und das Steuerungssignal (SIG) derart erzeugt wird, dass
- in einem ersten Zustand, in dem das Fahrzeug einen größeren Abstand zur Parklücke aufweist als der vorgegebene weitere Schwellenwert (SW1), das virtuelle Fahrzeug (VF), die virtuelle Parklücke (P) und die schematischen Elemente (SE) im Bild kleiner dargestellt werden als in einem zweiten Zustand,
- in dem zweiten Zustand, in dem das Fahrzeug einen kleineren Abstand zur Parklücke aufweist als der vorgegebene weitere Schwellenwert (SW1) das virtuelle Fahrzeug (VF), die virtuelle Parklücke (P) und die schematischen Elemente (SE) im Bild größer dargestellt werden als in dem ersten Zustand,
- das virtuelle Fahrzeug (VF) und die virtuelle Parklücke (P) vollständig im Bild dargestellt werden.

4. Verfahren nach Anspruch 2, bei dem abhängig von der relativen Position des Fahrzeugs zur Parklücke (PFP) das Steuerungssignal (SIG) fortlaufend angepasst wird.

5. Verfahren nach Anspruch 3, wobei der vorgegebene Schwellenwert (SW2) kleiner ist als der vorgegebene weitere Schwellenwert (SW1) ist.

6. Verfahren nach einem der vorherigen Ansprüche, bei dem
- eine relative Position des Fahrzeugs zu den Kollisionshindernissen (PFK) ermittelt wird,
- das Steuerungssignal (SIG) so erzeugt wird, dass in dem Bild eine Farbe der schematischen Elemente abhängig von der relativen Position des Fahrzeugs zu den Kollisionshindernissen (PFK) angezeigt wird.

7. Verfahren nach einem der vorherigen Ansprüche, bei dem
- das Steuerungssignal (SIG) so erzeugt wird, dass mögliche Parkmanöver (PM) für eine Auswahl durch den Fahrer angezeigt werden,
- abhängig von einer detektierten Auswahl des Fahrers das Fahrzeug automatisiert eingeparkt wird.

8. Vorrichtung zum Betreiben einer Displayeinheit eines Fahrzeugs, wobei die Vorrichtung dazu ausgebildet ist das Verfahren nach den Ansprüchen 1 bis 7 durchzuführen.

9. Computerprogramm zum Betreiben einer Displayeinheit eines Fahrzeugs, wobei das Computerprogramm ausgebildet ist ein Verfahren nach den Ansprüchen 1 bis 7 bei seiner Ausführung durchzuführen.

10. Computerprogrammprodukt umfassend ausführbaren Programmcode, wobei der Programmcode bei Ausführung das Verfahren nach einem der Ansprüche 1 bis 7 ausführt.

## Claims

1. Method for operating a display unit of a vehicle, in which
- a parking space, at least one further parking space and collision obstacles are detected, wherein the collision obstacles are obstacles that are located in the vicinity of the vehicle and/or of the parking spaces,
- a relative position of the vehicle with respect to the parking space (PFP) is determined continuously,
- a control signal (SIG) is generated in order to generate an image on the display unit, specifically depending on the relative position of the vehicle with respect to the parking space (PFP) and with respect to the at least one further parking space, wherein the image comprises a virtual vehicle (VF), virtual parking spaces (P) and schematic elements (SE), wherein the virtual vehicle (VF) represents a schematic depiction of the vehicle, the virtual parking spaces (P) represent a schematic depiction of the parking spaces and the schematic elements (SE) represent a schematic depiction of the collision obstacles, wherein the continuously determined relative position of the vehicle with respect to the parking space (PFP) is compared with a predefined threshold value (SW2) and the control signal (SIG) is generated such that, in the case of a relative position of the vehicle with respect to the parking space (PFP) that represents a distance of the vehicle with respect to the parking space that is smaller than the predefined threshold value (SW2), the control signal (SIG) is generated such that a bird's-eye view based on a camera image is displayed in the image.

2. Method according to Claim 1, in which
- the control signal (SIG) for generating the image is adjusted depending on the determined relative position of the vehicle with respect to the parking space (PFP).

3. Method according to Claim 2, in which the continuously determined relative position of the vehicle with respect to the parking space (PFP) is compared with a predefined further threshold value (SW1) and the control signal (SIG) is generated such that,
- in a first state, in which the vehicle is at a distance from the parking space that is greater than the predefined further threshold value (SW1), the virtual vehicle (VF), the virtual parking space (P) and the schematic elements (SE) are depicted smaller in the image than in a second state,
- in the second state, in which the vehicle is at a distance from the parking space that is smaller than the predefined further threshold value (SW1), the virtual vehicle (VF), the virtual parking space (P) and the schematic elements (SE) are depicted larger in the image than in the first state,
- the virtual vehicle (VF) and the virtual parking space (P) are depicted completely in the image.

4. Method according to Claim 2, in which the control signal (SIG) is adjusted continuously depending on the relative position of the vehicle with respect to the parking space (PFP).

5. Method according to Claim 3, wherein the predefined threshold value (SW2) is smaller than the predefined further threshold value (SW1).

6. Method according to one of the preceding claims, in which
- a relative position of the vehicle with respect to the collision obstacles (PFK) is determined,
- the control signal (SIG) is generated such that a colour of the schematic elements is displayed in the image depending on the relative position of the vehicle with respect to the collision obstacles (PFK).

7. Method according to one of the preceding claims, in which
- the control signal (SIG) is generated such that possible parking manoeuvres (PM) are displayed for selection by the driver,
- the vehicle is parked automatically depending on a detected selection from the driver.

8. Device for operating a display unit of a vehicle, wherein the device is designed to perform the method according to Claims 1 to 7.

9. Computer program for operating a display unit of a vehicle, wherein the computer program is designed to perform a method according to Claims 1 to 7 when it is executed.

10. Computer program product comprising executable program code, wherein the program code executes the method according to one of Claims 1 to 7 when it is executed.

## Revendications

1. Procédé permettant de faire fonctionner une unité d'affichage d'un véhicule, dans lequel
- une place de stationnement, au moins une autre place de stationnement et des obstacles à risque de collision sont détectés, les obstacles à risque de collision étant des obstacles qui se trouvent à proximité du véhicule et/ou des places de stationnement,
- une position relative du véhicule par rapport à la place de stationnement (PFP) est déterminée en continu,
- un signal de commande (SIG) est généré pour générer une image sur l'unité d'affichage, notamment en fonction de la position relative du véhicule par rapport à la place de stationnement (PFP) et à ladite au moins une autre place de stationnement, l'image comprenant un véhicule virtuel (VF), des places de stationnement virtuelles (P) et des éléments schématiques (SE), le véhicule virtuel (VF) étant une représentation schématique du véhicule, les places de stationnement virtuelles (P) étant une représentation schématique des places de stationnement et les éléments schématiques (SE) étant une représentation schématique des obstacles à risque de collision, dans lequel la position relative, déterminée en continu, du véhicule par rapport à la place de stationnement (PFP) est comparée avec une valeur seuil prédéfinie (SW2), et le signal de commande (SIG) est généré de telle sorte que dans une position relative du véhicule par rapport à la place de stationnement (PFP) qui représente une plus petite distance du véhicule par rapport à la place de stationnement que la valeur seuil prédéfinie (SW2), le signal de commande (SIG) est généré de telle sorte qu'une perspective aérienne basée sur une image de caméra est affichée sur l'image.

2. Procédé selon la revendication 1, dans lequel
- le signal de commande (SIG) permettant de générer l'image est adapté en fonction de la position relative du véhicule déterminée par rapport à la place de stationnement (PFP).

3. Procédé selon la revendication 2, dans lequel la position relative, déterminée en continu, du véhicule par rapport à la place de stationnement (PFP) est comparée avec une autre valeur seuil prédéfinie (SW1), et le signal de commande (SIG) est généré de telle sorte, que
- dans un premier état, dans lequel le véhicule présente une plus grande distance par rapport à la place de stationnement que l'autre valeur seuil prédéfinie (SW1), le véhicule virtuel (VF), la place de stationnement virtuelle (P) et les éléments schématiques (SE) sont représentés sur l'image en plus petit que dans un deuxième état,
- dans le deuxième état, dans lequel le véhicule présente une plus petite distance par rapport à la place de stationnement que l'autre valeur seuil prédéfinie (SW1), le véhicule virtuel (VF), la place de stationnement virtuelle (P) et les éléments schématiques (SE) sont représentés sur l'image en plus grand que dans le premier état,
- le véhicule virtuel (VF) et la place de stationnement virtuelle (P) sont représentés entièrement sur l'image.

4. Procédé selon la revendication 2, dans lequel le signal de commande (SIG) est adapté en continu en fonction de la position relative du véhicule par rapport à la place de stationnement (PFP).

5. Procédé selon la revendication 3, dans lequel la valeur seuil prédéfinie (SW2) est inférieure à l'autre valeur seuil prédéfinie (SW1).

6. Procédé selon l'une quelconque des revendications précédentes, dans lequel
- une position relative du véhicule par rapport aux obstacles à risque de collision (PFK) est déterminée,
- le signal de commande (SIG) est généré de telle sorte que sur l'image, une couleur des éléments schématiques est affichée en fonction de la position relative du véhicule par rapport aux obstacles à risque de collision (PFK).

7. Procédé selon l'une quelconque des revendications précédentes, dans lequel
- le signal de commande (SIG) est généré de telle sorte que des manœuvres de stationnement possibles (PM) sont affichées en vue d'une sélection par le conducteur,
- en fonction d'une sélection détectée du conducteur, le véhicule est garé automatiquement.

8. Dispositif permettant de faire fonctionner une unité d'affichage d'un véhicule, le dispositif étant réalisé pour exécuter le procédé selon l'une quelconque des revendications 1 à 7.

9. Programme informatique permettant de faire fonctionner une unité d'affichage d'un véhicule, le programme informatique étant réalisé pour exécuter un procédé selon l'une quelconque des revendications 1 à 7 lors de son exécution.

10. Produit de programme informatique comprenant du code programme exécutable, le code programme exécutant le procédé selon l'une quelconque des revendications 1 à 7 lors de son exécution.
